# EUROPÄISCHE PATENTSCHRIFT

(11) **EP 1 123 473 B1**
(45) Veröffentlichungstag und Bekanntmachung des Hinweises auf die Patenterteilung: **07.08.2002**
(21) Anmeldenummer: 99953861.4
(22) Anmeldetag: 16.10.1999
(51) Int. Cl.: F16H 61/02

(54) **VERFAHREN ZUR STEUERUNG EINES AUTOMATISCHEN SCHALTGETRIEBES**
METHOD FOR CONTROLLING AN AUTOMATIC GEARBOX
PROCEDE DE REGULATION D'UNE BOITE DE VITESSES AUTOMATIQUE

(30) Priorität: 24.10.1998 DE 19849062
(43) Veröffentlichungstag der Anmeldung: 16.08.2001
(73) Patentinhaber: ZAHNRADFABRIK FRIEDRICHSHAFEN AG, 88015 Friedrichshafen (DE)
(72) Erfinder: HENNEKEN, Markus, D-88079 Kressbronn (DE); JAUCH, Friedemann, D-88074 Meckenbeuren (DE); HERBSTER, Kai-Uwe, D-88046 Friedrichshafen (DE); SCHULER, Franz-Josef, D-88079 Kressbronn (DE); MAUZ, Thomas, D-88079 Kressbronn (DE)
(86) Internationale Anmeldenummer: EP9907857
(87) Internationale Veröffentlichungsnummer: WO0025043

(56) Entgegenhaltungen:
- EP-A- 0 635 659
- DE-A- 3 539 684
- DE-A- 4 333 583
- DE-A- 4 334 146
- US-A- 5 152 192

## Beschreibung

Die Erfindung betrifft ein Verfahren zur Steuerung eines automatischen Schaltgetriebes nach dem Oberbegriff von Anspruch 1.

In modernen elektronischen Steuerungen für automatische Schaltgetriebe sind üblicherweise mehrere Schaltprogramme abgelegt, die den Bereich von verbrauchsoptimierter bis zu leistungsoptimierter, sportlicher Fahrweise mit mehreren Zwischenstufen abdecken. Ein Schaltprogramm ist üblicherweise als ein Satz von Schaltkennlinien dargestellt. Jede Schaltkennlinie enthält für einen bestimmten Gangwechsel (z. B. dritter Gang nach vierter Gang) die Information, bei welcher Geschwindigkeit bzw. Drehzahl und welcher Lastvorgabe bzw. Fahrpedalstellung der Gangwechsel stattfinden soll.

Ein verbrauchsoptimiertes Schaltprogramm zeichnet sich dadurch aus, daß auch bei relativ großen Fahrpedalstellungen bereits bei relativ kleinen Drehzahlen in den jeweils nächsthöheren Gang geschaltet wird und daß Rückschaltungen bei kleinen Drehzahlen bzw. erst bei relativ hohen Lastvorgaben ausgelöst werden. Bei einem leistungsoptimierten oder sportlichen Schaltprogramm werden Hochschaltungen erst bei höheren Schaltdrehzahlen ausgelöst, so daß die einzelnen Gänge weiter ausgedreht werden. Rückschaltungen erfolgen ebenfalls bei höheren Drehzahlen. Rückschaltungen werden bereits bei mittleren Fahrpedalstellungen ausgelöst.

Aus den in der elektronischen Steuerung abgelegten Schaltprogrammen werden die Schaltpunkte zu jedem Zeitpunkt, abhängig von einer Fahraktivitäts-Kenngröße, selbsttätig ausgewählt. Der Fahrer wird hierdurch von dem früher üblichen manuellen Umschalten zwischen einem verbrauchsoptimierten "E"-Schaltprogramm und einem leistungsoptimierten "S"-Schaltprogramm entlastet.

Die EP 0 694 138 B1 offenbart ein Verfahren zur Bestimmung der Fahraktivitäts-Kenngröße, welche abhängig von einer Wählhebelaktivität, einem Motormomentenüberschuß, vom Kurvenradius und der Bremsaktivität des Fahrers gebildet wird. Sie kann beliebige Werte zwischen einem verbrauchsoptimierten minimalen Wert und einem leistungsoptimierten maximalen Wert annehmen. Die Änderung der Fahraktivitäts-Kenngröße erfolgt üblicherweise relativ langsam. In bestimmten Fahrsituationen ist es jedoch wünschenswert, sehr schnell von einem eher verbrauchsoptimierten Fahrprogramm in ein sportlicheres Fahrprogramm zu gelangen.

Die DE 39 22 051 C2 offenbart ein Verfahren, bei dem das leistungsoptimierte Schaltprogramm angewählt wird, sobald der Gradient des Fahrpedalstellungssignalwerts einen Grenzwert überschreitet. Das leistungsoptimierte Schaltprogramm wird entweder direkt oder über einen Zwischenschritt, in dem zunächst ein nächstsportlicheres Schaltprogramm angewählt ist, erreicht. Es wird in das zuvor angewählte Schaltprogramm zurückgekehrt, wenn der Drosselklappensignalwert um einen bestimmten Wert zurückgenommen wird. Dieses Verfahren ist geeignet, einem Fahrer spontan ein sportlicheres Schaltprogramm mit höheren Schaltdrehzahlen und entsprechend höheren Zugkraftüberschüssen bereitzustellen, was beispielsweise während eines Überholvorgangs erwünscht sein kann.

Abhängig vom jeweiligen Fahrzustand kann bei diesem Verfahren jedoch auch ein für den Fahrer unerwartetes Verhalten des automatischen Schaltgetriebes auftreten.

Die gattungsgemäße DE 35 39 684 A offenbart ein Verfahren zum Steuern eines Automatgetriebes, das von einem elektronischen Steuergerät angesteuert wird. In dem elektronischen Steuergerät sind mehrere Schaltprogramme abgelegt, die bestimmten Werten einer Fahraktivitätskenngröße zugeordnet sind. In jedem Schaltprogramm sind die Schaltkennlinien durch Fahrpedalstellungen und Schaltdrehzahlen bestimmt, wobei aus einem Fahrpedalstellungssignal ein Fahrpedalstellunsgradient ermittelt wird. Wenn der Fahrpedalstellungsgradient bei einem schnellen Niedertreten des Fahrpedals einen vorgebbaren Grenzwert überschreitet, werden die Schaltdrehzahlen unmittelbar nach höheren Drehzahlen verschoben.

Der Erfindung liegt die Aufgabe zugrunde, dieses Verfahren auf die Fahrbedingungen besser anzupassen, um auf den Fahrerwunsch schneller und flexibler zu reagieren.

Erfindungsgemäß wird diese Aufgabe durch ein auch die Merkmale des kennzeichnenden Teils des Hauptanspruchs aufweisendes Verfahren gelöst. Vorteilhafte Ausgestaltungen sind in den Unteransprüchen enthalten.

Das schnelle Niedertreten des Fahrpedals führt also nicht dazu, daß ein bestimmtes diskretes Schaltprogramm angewählt wird. Vielmehr wird die Fahraktivitäts-Kenngröße unmittelbar um einen vorgebbaren Offset-Betrag vergrößert. Dadurch, daß die aktuellen Schaltdrehzahlen, abhängig vom aktuellen Wert der Fahraktivitäts-Kenngröße, durch Interpolation zwischen Schaltkennlinien von jeweils zwei benachbarten Schaltprogrammen ermittelt werden, werden quasi zwischen den diskreten Schaltprogrammen annähernd beliebig viele Zwischenschaltprogramme erzeugt.

In einer vorteilhaften Ausgestaltung des Verfahrens wird in der elektronischen Steuerung - wenigstens abhängig von der Fahrpedalstellung - auf Zug- oder Schubbetrieb geschlossen. Die Fahraktivitäts-Kenngröße wird nur dann um den vorgegebenen Offset-Betrag mit der Fahrpedalstellung vergrößert, die am Ende des schnellen Niedertretens erreicht ist, wenn auf Zugbetrieb geschlossen wird. In einer Situation, bei der im Schubbetrieb das Fahrpedal kurz angetippt wird, ohne daß in den Zugbetrieb übergegangen wird, werden somit ungewollte hohe Drehzahlen vermieden.

Ebenfalls unerwünscht ist, wenn durch das schnelle Niedertreten eine Rückschaltung ausgelöst wird und im Zielgang Schubbetrieb herrscht oder nur eine sehr geringe Zugkraft anliegt. Eine vorteilhafte Ausgestaltung des erfindungsgemäßen Verfahrens sieht daher vor, daß in der elektronischen Steuerung vorausberechnet wird, ob eine Rückschaltung ausgelöst würde, wenn die Fahraktivitäts-Kenngröße um den vorgebbaren Offset-Betrag vergrößert würde und welcher Zielgang nach der Rückschaltung eingelegt wäre. Es wird geprüft, ob die Fahrpedalstellung oberhalb der Zug-Schub-Kennlinie im Zielgang liegt. Die Fahraktivitäts-Kenngröße wird nur dann um den vorgebbaren Offset-Betrag vergrößert, wenn in dem Zielgang mit der Fahrpedalstellung, die am Ende des schnellen Niedertretens erreicht ist, sicher auf Zugbetrieb geschlossen wird.

Auf das Ende des schnellen Niedertretens kann vorteilhaft dann geschlossen werden, wenn der Fahrpedalstellungsgradient um einen vorgebbaren Betrag kleiner ist als der Grenzwert, bei dem die Schaltdrehzahlen zu höheren Drehzahlen verschoben werden, sich die Bewegung also wieder verlangsamt hat.

Der Ausstieg aus der Funktion, bei welchem die Fahraktivitäts-Kenngröße wieder um denselben Offset-Betrag verkleinert wird, um den sie zuvor vergrößert wurde, erfolgt in vorteilhafter Weise dann, wenn die aktuelle Fahrpedalstellung um einen bestimmten Betrag kleiner ist als die Fahrpedalstellung, die am Ende des schnellen Niedertretens erreicht wurde, wenn sicher auf Schubbetrieb geschlossen wird oder wenn eine vorgebbare Zeit seit der Vergrößerung der Fahraktivitäts-Kenngröße verstrichen ist. Wenn der Fahrer die Fahrpedalstellung zurückgenommen hat oder in den Schubbetrieb wechselt, kann darauf geschlossen werden, daß die erhöhte Zugkraftanforderung nicht weiterbesteht. Ein sicherer Ausstieg aus der Funktion erfolgt nach Ablauf der vorgebbaren Zeit.

In einer alternativen Ausgestaltung wird die Funktion verlassen, wenn eine Hochschaltung angefordert wird, wenn sicher auf Schubbetrieb geschlossen wird oder wenn die vorgebbare Zeit seit der Vergrößerung der Fahraktivitäts-Kenngröße verstrichen ist. Solange das Fahrzeug im Zugbetrieb bleibt, führt bei dieser Ausgestaltung eine kurzzeitige Rücknahme der Fahrpedalstellung nicht zum Verlassen der Funktion, was störend sein konnte, wenn hierdurch eine ungewollte Hochschaltung ausgelöst wird.

Eine flexiblere Anpassung an den jeweiligen Fahrertyp kann erreicht werden, wenn die vorgebbare Zeit seit der Vergrößerung der Fahraktivitäts-Kenngröße vom aktuellen Wert der Fahraktivitäts-Kenngröße abhängt. Die Werte können beispielsweise in einer Kennlinie gespeichert und für einen verbrauchsorientierten Fahrer kleiner als für einen leistungsorientierten Fahrer sein.

Weiterhin kann es vorteilhaft sein, wenn der Offset-Betrag vom aktuellen Wert der Fahraktivitäts-Kenngröße abhängt. Hierdurch kann beispielsweise erreicht werden, daß auch von dem verbrauchsoptimierten Schaltprogramm heraus eine hinreichend große Verschiebung der Schaltpunkte in Richtung höherer Schaltdrehzahlen erreicht wird.

Der Vorgang des schnellen Niedertretens des Fahrpedals kann differenziert bewertet werden, wenn der Offset-Betrag vom ermittelten Wert des Fahrpedalstellungsgradienten abhängt. Höheren Werten des Fahrpedalstellungsgradienten sind hierzu in einer Kennlinie höhere Werte für den Offset-Betrag zugewiesen.

Wenn der Grenzwert für den Fahrpedalstellungsgradienten vom aktuellen Wert der Fahrpedalstellung abhängt, kann von der elektronischen Steuerung, abhängig davon, wie weit das Fahrpedal niedergetreten wurde, unterschiedlich reagiert werden. Wenn beispielsweise dem Grenzwert für den Fahrpedalstellungsgradienten für kleine Fahrpedalstellungen große Werte zugeordnet sind, kann dadurch ein ungewolltes Auslösen der Funktion bei kleinen Fahrpedalstellungen vermieden werden. Für das erfindungsgemäße Verfahren ist es notwendig, die Zustände "Zugbetrieb" und "Schubbetrieb" zuverlässig voneinander zu unterscheiden.
Auf das Vorliegen von Zugbetrieb kann mit hoher Sicherheit geschlossen werden, wenn die Fahrpedalstellung um einen bestimmten Betrag größer ist als eine Zug-Schub-Kennlinie. Entsprechend kann mit hoher Sicherheit auf Schubbetrieb geschlossen werden, wenn die Fahrpedalstellung um einen bestimmten Betrag kleiner ist als die Zug-Schub-Kennnlinie.

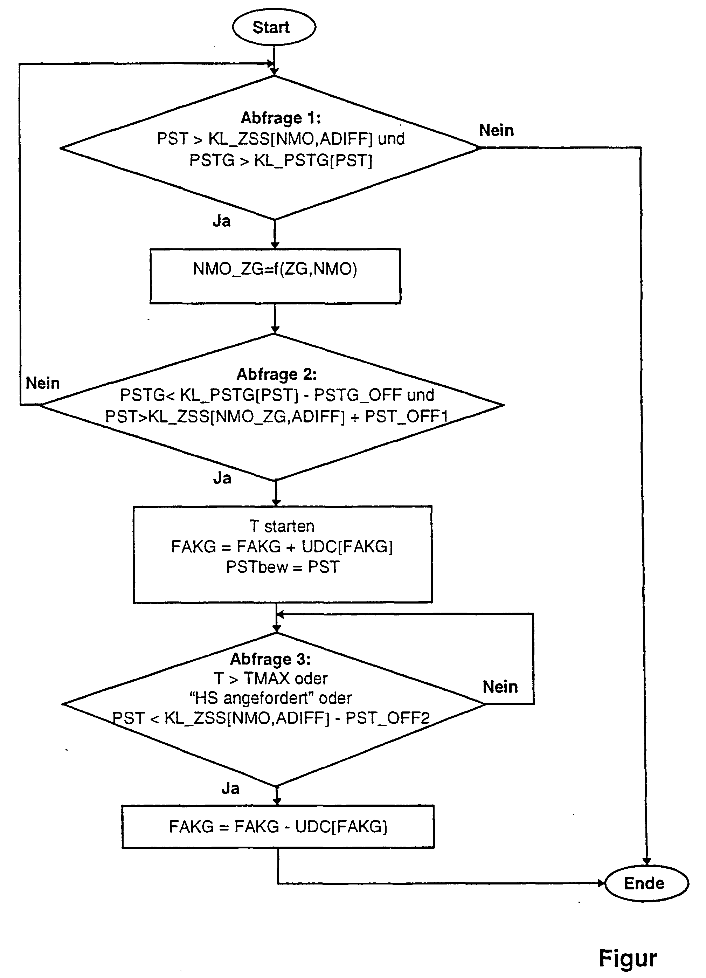

Die Erfindung wird anhand eines Programmablauf-Diagramms einer Ausführungsform des Verfahrens gemäß der einzigen Figur erläutert.

Bei dem erfindungsgemäßen Verfahren wird laufend ein aktueller Wert PST für die Fahrpedalstellung erfaßt. Als Meßwertgeber dient ein mit dem Fahrpedal gekoppelter Potentiometer. Aus dem Signal wird laufend ein aktueller Wert PSTG für den Fahrpedalstellungsgradienten ermittelt. Aus einer in der elektronischen Steuerung abgelegten Zug-Schub-Kennlinie wird laufend ein Grenzwert KL_ZSS für die Fahrpedalstellung ermittelt, welcher von der Motordrehzahl NMO und einer fahrbahnneigungsabhängigen Größe ADIFF abhängt. Oberhalb dieses Grenzwerts KL_ZSS wird auf Zugbetrieb und unterhalb auf Schubbetrieb geschlossen. Ebenso wird ein Grenzwert KL_PSTG für den Fahrpedalstellungsgradienten ermittelt, welcher von der Fahrpedalstellung PST abhängt. Im ersten Abfrageblock (Abfrage 1) wird der aktuelle Wert PST für die Fahrpedalstellung mit dem Grenzwert KL_ZSS für die Fahrpedalstellung verglichen und der aktuelle Wert PSTG für den Fahrpedalstellungsgradienten mit dem Grenzwert KL_PSTG für den Fahrpedalstellungsgradienten. Wenn der aktuelle Wert PST größer als der Grenzwert KL_ZSS ist - also auf Zugbetrieb im Istgang geschlossen werden kann - und der aktuelle Wert PSTG größer ist als der Grenzwert KL_PSTG
- also auf eine spontane Zugkraftanforderung geschlossen werden kann -, dann wird zunächst vorausberechnet, ob eine Rückschaltung ausgelöst würde, wenn die Fahraktivitäts-Kenngröße FAKG um den vorgebbaren Offset-Betrag UDC vergrößert würde, welcher Zielgang ZG nach der Rückschaltung eingelegt wäre und welche Motordrehzahl NMO_ZG im Zielgang erreicht würde, wobei die Motordrehzahl NMO_ZG von der aktuellen Motordrehzahl NMO und der Übersetzung des Zielgangs abhängt.

Im zweiten Abfrageblock (Abfrage 2) wird geprüft, ob der aktuelle Wert PSTG des Fahrpedalstellungsgradienten kleiner ist als der Grenzwert KL_PSTG abzüglich eines vorgebbaren Betrags PSTG_OFF. Ist dies der Fall, wird auf das Ende des Niedertretens des Fahrpedals geschlossen. Wenn dann auch noch der dann erreichte aktuelle Wert PST der Fahrpedalstellung größer ist als der Grenzwert KL_ZSS, welcher abhängig von der Motordrehzahl NMO_ZG im Zielgang bestimmt wird, zuzüglich eines weiteren vorgebbaren Betrags PST_OFF1, wird darauf geschlossen, daß auch nach einer Rückschaltung in den Zielgang sicher Zugbetrieb vorliegt.

Sind also diese beiden Bedingungen erfüllt, wird ein Timer T gestartet und die Fahraktivitäts-Kenngröße FAKG um einen vorgebbaren Offset-Betrag UDC vergrößert. Mit dem dann aktuellen Wert FAKG der Fahraktivitäts-Kenngröße werden aktuelle Schaltdrehzahlen durch Interpolation zwischen Schaltkennlinien von jeweils zwei benachbarten Schaltprogrammen ermittelt, wobei in der Regel eine einfache oder eine doppelte Rückschaltung ausgelöst wird.

In einem weiteren Abfrageblock (Abfrage 3) wird überprüft, ob der Timer T anzeigt, daß eine vorgebbare Zeit TMAX seit der Vergrößerung der Fahraktivitäts-Kenngröße verstrichen ist, ob eine Hochschaltung HS angefordert wurde oder ob die aktuelle Pedalstellung PST um einen vorgebbaren Betrag PST_OFF2 kleiner ist als der aktuelle Wert des Grenzwerts KL_ZSS, wodurch sicher auf Schubbetrieb geschlossen werden kann. Diese Abfrage läuft so lange, bis mindestens eine der Bedingungen erfüllt ist, worauf die Fahraktivitäts-Kenngröße FAKG wieder um den vorgebbaren Offset-Betrag UDC, um den sie zuvor vergrößert wurde, verkleinert wird.

Neben der anhand der Figur beschriebenen Ausführungsform sind weitere Ausgestaltungen der Erfindung denkbar.

Insbesondere ist es möglich, anstatt der Fahrpedalstellung ein anderes Signal, wie z. B. eine Drosselklappenstellung für die Lastvorgabe durch den Fahrer, zu finden. Darüber hinaus ist es möglich, die Fahrertypbewertung, deren Ergebnis die Fahraktivitäts-Kenngröße ist, während die Funktion aktiv ist, also während die Fahraktivitäts-Kenngröße um den vorgebbaren Offset vergrößert ist, zu deaktivieren, so daß nach der kurzzeitigen erhöhten Zugkraftanforderung durch den Fahrer wieder in das ursprüngliche Schaltprogramm zurückgekehrt wird. Möglich ist natürlich auch der umgekehrte Fall, in dem die Fahrertypbewertung im Hintergrund mitläuft.

### Bezugszeichen

- PST: Pedalstellung
- KL_ZSS: Zug-Schub-Kennlinie
- MNO: Motordrehzahl
- ADIFF: fahrbahnneigungsabhängige Größe
- PSTG: Fahrpedalstellungsgardient
- KL_PSTG: Grenzwert
- MNO_ZG: Motordrehzahl im Zielgang
- PSTG_OFF: Offset auf Zug-Schub-Kennlinie
- PST_OFF1: Offset auf Zug-Schub-Kennlinie
- T: Timer
- FAKG: Fahraktivitäts-Kenngröße
- UDC: Offset-Betrag
- TMAX: Maximalwert des Timers T
- PST_OFF2: Offset auf Zug-Schub-Kennlinie

## Patentansprüche

1. Verfahren zur Steuerung eines automatischen Schaltgetriebes, das von einem elektronischen Steuergerät angesteuert wird, wobei in dem elektronischen Steuergerät mehrere Schaltprogramme abgelegt sind, welche bestimmten Werten einer Fahraktivitäts-Kenngröße (FAKG) zugeordnet sind, in jedem Schaltprogramm Schaltkennlinien durch Fahrpedalstellungen und Schaltdrehzahlen bestimmt sind, wobei aus einem Fahrpedalstellungssignal (PST) ein Fahrpedalsteliungsgradient (PSTG) ermittelt wird und die Schaltdrehzahlen unmittelbar zu höheren Drehzahlen verschoben werden, wenn der Fahrpedalstellungsgradient (PSTG) bei einem schnellen Niedertreten des Fahrpedals einen vorgebbaren Grenzwert (KL_PSTG) überschreitet, **dadurch gekennzeichnet, daß** aktuelle Schaltdrehzahlen, abhängig vom aktuellen Wert der Fahraktivitäts-Kenngröße, durch Interpolation zwischen Schaltkennlinen von jeweils zwei benachbarten Schaltprogrammen ermittelt werden, und die Fahraktivitäts-Kenngröße (FAKG) unmittelbar um einen vorgebbaren Offset-Betrag (UDC) vergrößert wird, wenn der Fahrpedalstellungsgradient (PSTG) den vorgebbaren Grenzwert (KL_PSTG) überschreitet.

2. Verfahren nach Anspruch 1, **dadurch gekennzeichnet, daß** in der elektronischen Steuerung, abhängig von der Fahrpedalstellung, auf Zug- oder Schubbetrieb geschlossen wird, und daß die Fahraktivitäts-Kenngröße (FAKG) nur dann um den vorgebbaren Offset-Betrag (UDC) vergrößert wird, wenn mit der Fahrpedalstellung (PST), die am Ende des schnellen Niedertretens erreicht ist, auf Zugbetrieb geschlossen wird.

3. Verfahren nach Anspruch 1 oder 2, **dadurch gekennzeichnet, daß** in der elektronischen Steuerung vorausberechnet wird, ob eine Rückschaltung ausgelöst würde, wenn die Fahraktivitäts-Kenngröße (FAKG) um den vorgebbaren Offset-Betrag (UDC) vergrößert würde und welcher Zielgang (ZG) nach der Rückschaltung eingelegt wäre, und daß die Fahraktivitats-Kenngröße (FAKG) nur dann um den vorgebbaren Offset-Betrag (UDC) vergrößert wird, wenn in dem Zielgang (ZG) mit der Fahrpedalstellung (PST), die am Ende des schnellen Niedertretens erreicht ist, sicher auf Zugbetrieb geschlossen wird.

4. Verfahren nach Anspruch 2 oder 3, **dadurch gekennzeichnet, daß** auf das Ende des schnellen Niedertretens geschlossen wird, wenn der Fahrpedalstellungsgradient (PSTG) um einen vorgebbaren Betrag (PSTG_OFF) kleiner ist als der Grenzwert (KL_PSTG).

5. Verfahren nach einem der Ansprüche 1 bis 4, **dadurch gekennzeichnet, daß**, nachdem die Fahraktivitäts-Kenngröße (FAKG) um den vorgebbaren Offset-Betrag (UDC) vergrößert wurde, die Fahraktivitäts-Kenngröße (FAKG) wieder um denselben Offset-Betrag (UDC) verkleinert wird, wenn die aktuelle Fahrpedalstellung (PST) um einen bestimmten Betrag kleiner ist, als die Fahrpedalstellung, die am Ende des schnellen Niedertretens erreicht wurde, wenn sicher auf Schubbetrieb geschlossen wird, oder wenn eine vorgebbare Zeit (TMAX) seit der Vergrößerung der Fahraktivitäts-Kenngröße verstrichen ist.

6. Verfahren nach einem der Ansprüche 1 bis 4, **dadurch gekennzeichnet, daß**, nachdem die Fahraktivitäts-Kenngröße (FAKG) um den vorgebbaren Offset-Betrag (UDC) vergrößert wurde, die Fahraktivitäts-Kenngröße (FAKG) wieder um denselben Offset-Betrag (UDC) verkleinert wird, wenn eine Hochschaltung (HS) angefordert wird, wenn sicher auf Schubbetrieb geschlossen wird, oder wenn eine vorgebbare Zeit (TMAX) seit der Vergrößerung der Fahraktivitäts-Kenngröße verstrichen ist.

7. Verfahren nach Anspruch 5 oder 6, **dadurch gekennzeichnet, daß** die vorgebbare Zeit (TMAX) vom aktuellen Wert der Fahraktivitäts-Kenngröße (FAKG) abhängt.

8. Verfahren nach einem der Anspruch 1 bis 7, **dadurch gekennzeichnet, daß** der Offset-Betrag (UDC) vom aktuellen Wert der Fahraktivitäts-Kenngröße (FAKG) abhängt.

9. Verfahren nach einem der Anspruch 1 bis 8, **dadurch gekennzeichnet, daß** der Offset-Betrag (UDC) vom ermittelten Wert des Fahrpedalstellungsgradienten (PSTG) abhängt.

10. Verfahren nach einem der Anspruch 1 bis 9, **dadurch gekennzeichnet, daß** der Grenzwert für den Fahrpedalstellungsgradienten (KL_PSTG) vom aktuellen Wert der Fahrpedalstellung (PST) abhängt.

11. Verfahren nach einem der Ansprüche 3 bis 10, **dadurch gekennzeichnet, daß** sicher auf Zugbetrieb geschlossen wird, wenn die Fahrpedalstellung (PST) um einen vorgebbaren Betrag (PST_OFF1) größer ist als eine Zug-Schub-Kennlinie (KL_ZSS) und daß sicher auf Schubbetrieb geschlossen wird, wenn die Fahrpedalstellung (PST) um einen vorgebbaren Betrag (PST_OFF2) kleiner ist als die Zug-Schub-Kennlinie (KL_ZSS).

## Claims

1. A method for controlling an automatic transmission by means of an electronic control unit whereby several shift programs are provided in this electronic control unit which are allocated to specific values of a driving activity characteristic (FAKG) and shifting characteristics are determined in each shift program by means of accelerator positions and shifting speeds, whereby an accelerator pedal gradient (PSTG) is determined from an accelerator pedal position signal (PST) and the shifting speeds are immediately increased when the accelerator pedal gradient (PSTG) goes beyond a given limiting value (KL_PSTG),
**characterized in that**, the current shift speeds, according to the real value of the driving activity characteristic are determined by interpolation between shifting characteristics from two respective adjacent shift programs and the driving activity characteristic (FAKG)is immediately increased by a predetermined offset value (UDC) when the accelerator pedal position gradient (PSTG) goes beyond the given limiting value (KL_PSTG).

2. Method according to claim 1,
**characterized in that** the electronic control unit moves to traction or coasting mode in response to accelerator pedal position, and that the driving activity characteristic (FAKG) only increases by the specified offset value (UDC) if the accelerator pedal position (PST) engages traction mode at the end of rapid downwards pressure on the accelerator pedal.

3. Method according to claim 1 or 2,
**characterized in that** the electronic control unit calculates in advance whether a downshift should be performed if the driving activity characteristic (FAKG) is increased by the specifiable offset value (UDC) if the target gear (ZG) **in that** accelerator pedal position (PST) reached at the end of rapid downwards pressure on the pedal securely engages traction mode.

4. Method according to claim 2 or 3,
**characterized in that** the system closes at the end of any rapid downwards pressure on the accelerator pedal if the accelerator pedal position gradient (PSTG) is a specifiable amount (PSTG_OFF) less than the limiting value (KL_PSTG).

5. Method according to one of claims 1 to 4,
**characterized in that**, once the driving activity characteristic (FAKG) has been increased by the specifiable offset value (UDC), the driving activity characteristic (FAKG) is then reduced by the same offset value (UDC) once the prevailing accelerator pedal position (PST) is a defined amount less than the accelerator pedal position reached after rapid downwards pressure on the pedal once coasting mode has been reliably selected, or if a specifiable time (TMAX) has elapsed since the increase in the driving activity characteristic.

6. Method according to one of claims 1 to 4,
**characterized in that**, once the driving activity characteristic (FAKG) has increased by the specifiable offset value (UDC), it is then reduced by the same offset value (UDC) once an upshift (HS) is called for at the point where coasting mode is reliably re-engaged, or once a specifiable time (TMAX) has elapsed since the increase in the driving activity characteristic.

7. Method according to claim 5 or 6
**characterized in that** the specifiable time (TMAX) is dependent on the prevailing value for the driving activity characteristic (FAKG).

8. Method according to one of claims 1 to 7,
**characterized in that** the offset value (UDC) is dependent on the prevailing value for the driving activity characteristic (FAKG).

9. Method according to one of claims 1 to 8,
**characterized in that** the offset value (UDC) is dependent on the value determined for the accelerator pedal position gradient (PSTG).

10. Method according to one of claims 1 to 9,
**characterized in that** the limiting value for the accelerator position gradient (KL_PSTG) is dependent on the prevailing value for the accelerator pedal position (PST).

11. Method according to one of claims 3 to 10,
**characterized in that** the system reliably engages traction mode once the accelerator pedal position (PST) is a specifiable amount (PST_OFF1) greater than the traction-coasting characteristic (KL_ZSS) and that the system reliably engages coasting mode once the accelerator pedal position (PST) is a specifiable amount (PST_OFF2) less than the traction-coasting characteristic (KL_ZSS).

## Revendications

1. Procédé pour la commande d'une boîte de vitesses à changement de rapport automatique qui est commandée par un appareil de commande électronique, dans lequel plusieurs programmes de changement de rapport sont enregistrés dans l'appareil de commande électronique, programmes qui sont associés à certaines valeurs d'une grandeur caractéristique de l'activité de conduite (FAKG), des courbes caractéristiques étant déterminées dans chaque programme de changement de rapport par des positions de la pédale d'accélérateur et des vitesses de rotation de changement de rapport, et dans lequel un gradient de position de la pédale d'accélérateur (PSTG) est obtenu sur la base d'un signal de position de la pédale d'accélérateur (PST) et les vitesses de rotation de changement de rapport sont décalées immédiatement vers des vitesses de rotation plus élevées lorsque le gradient de la position de la pédale d'accélérateur (PSTG) franchit une valeur limite pouvant être prédéterminée (KL_PSTG) dans le sens ascendant en présence d'un enfoncement rapide de la pédale d'accélérateur, **caractérisé en ce que** des vitesses de rotation de changement de rapport actuelles sont obtenues en fonction de la valeur actuelle de la grandeur caractéristique de l'activité de conduite, par interpolation entre des courbes caractéristiques de changement de rapport appartenant à deux programmes de changement de rapport voisins, et la grandeur caractéristique de l'activité de conduite (FAKG) est augmentée immédiatement d'une valeur de décalage pouvant être prédéterminée (UDC) lorsque le gradient de la position de la pédale d'accélérateur (PSTG) franchit la valeur limite pouvant être prédéterminée (KL_PSTG) dans le sens ascendant.

2. Procédé selon la revendication 1, **caractérisé en ce que**, dans la commande électronique, on conclut à un fonctionnement en traction ou en poussée en fonction de la position de la pédale d'accélérateur, et **en ce que** la grandeur caractéristique de l'activité de conduite (FAKG) n'est augmentée de la valeur de décalage pouvant être prédéterminée (UDC) que si l'on conclut à un fonctionnement en traction avec la position de la pédale d'accélérateur (PST) qui est atteinte à la fin de l'enfoncement rapide.

3. Procédé selon la revendication 1 ou 2, **caractérisé en ce que**, dans la commande électronique, on calcule préalablement si une rétrogradation serait déclenchée si la grandeur caractéristique d'activité de conduite (FAKG) était augmentée de la valeur de décalage pouvant être prédéterminée (UDC) et quelle vitesse cible (ZG) serait enclenchée après la rétrogradation, et **en ce que** la grandeur caractéristique d'activité de conduite (FAKG) n'est augmentée de la valeur de décalage pouvant être prédéterminée (UDC) que si l'on conclut avec certitude à un fonctionnement en traction à la vitesse cible (ZG) avec la position de la pédale d'accélérateur (PST) qui est atteinte à la fin de l'enfoncement rapide.

4. Procédé selon la revendication 2 ou 3, **caractérisé en ce qu'**on conclut à la fin de l'enfoncement rapide lorsque le gradient de la position de la pédale d'accélérateur (PSTG) est inférieur à la valeur limite (KL_PSTG) d'une valeur pouvant être prédéterminée (PSTG_OFF).

5. Procédé selon l'une des revendications 1 à 4, **caractérisé en ce que**, lorsque la grandeur caractéristique de l'activité de conduite (FAKG) a été augmentée de la valeur de décalage pouvant être prédéterminée (UDC), la grandeur caractéristique de l'activité de conduite (FAKG) est de nouveau réduite de la même valeur de décalage (UDC) lorsque la position actuelle de la pédale d'accélérateur (PST) est inférieure d'une certaine valeur à la position de la pédale d'accélérateur qui a été atteinte à la fin de l'enfoncement rapide, lorsqu'on conclut avec certitude à un fonctionnement en poussée, ou lorsqu'un temps pouvant être prédéterminé (TMAX) s'est écoulé depuis l'augmentation de la grandeur caractéristique de l'activité de conduite.

6. Procédé selon l'une des revendications 1 à 4, **caractérisé en ce que**, lorsque la grandeur caractéristique d'activité de conduite (FAKG) a été augmentée de la valeur de décalage pouvant être prédéterminée (UDC), la grandeur caractéristique de l'activité de conduite (FAKG) est de nouveau réduite de la même valeur de décalage (UDC), lorsqu'un changement de rapport en montée (HS) est demandé, lorsqu'on conclut avec certitude à un fonctionnement en poussée ou lorsqu'un temps pouvant être prédéterminé (TMAX) s'est écoulé depuis l'augmentation de la grandeur caractéristique de l'activité de conduite.

7. Procédé selon la revendication 5 ou 6, **caractérisé en ce que** le temps pouvant être prédéterminé (TMAX) dépend de la valeur actuelle de la grandeur caractéristique de l'activité de conduite (FAKG).

8. Procédé selon l'une des revendications 1 à 7, **caractérisé en ce que** la valeur de décalage (UDC) dépend de la valeur actuelle de la grandeur caractéristique d'activité de conduite (FAKG).

9. Procédé selon l'une des revendications 1 à 8, **caractérisé en ce que** la valeur de décalage (UDC) dépend de la valeur obtenue du gradient de la position de la pédale d'accélérateur (PSTG).

10. Procédé selon l'une des revendications 1 à 9, **caractérisé en ce que** la valeur limite pour le gradient de la position de la pédale d'accélérateur (KL_PSTG) dépend de la valeur actuelle de la position de la pédale d'accélérateur (PST).

11. Procédé selon l'une des revendications 3 à 10, **caractérisé en ce qu'**on conclut avec certitude à un fonctionnement en traction lorsque la position de la pédale d'accélérateur (PST) est supérieure d'une valeur pouvant être prédéterminée (PST_OFF1) à une caractéristique de traction-poussée (KL_ZSS) et qu'on conclut avec certitude à un fonctionnement en poussée lorsque la position de la pédale d'accélérateur (PST) est inférieure d'une valeur pouvant être prédéterminée (PST_OFF2) à la caractéristique de traction-poussée (KL_ZSS).
